Europäisches Patentamt

European Patent Office

Office européen des brevets

(11) Publication number: **0 114 505**
**B1**

# EUROPEAN PATENT SPECIFICATION

(45) Date of publication of patent specification: **13.05.87**

(51) Int. Cl.⁴: **B 25 J 19/00**

(21) Application number: **83307827.2**

(22) Date of filing: **21.12.83**

(54) Apparatus and method for robot calibration.

(30) Priority: **28.12.82 US 453910**

(43) Date of publication of application:
**01.08.84 Bulletin 84/31**

(45) Publication of the grant of the patent:
**13.05.87 Bulletin 87/20**

(84) Designated Contracting States:
**DE FR GB IT SE**

(56) References cited:
**EP-A-0 042 960**
**DE-A-2 430 058**
**JP-A-53 004 964**
**US-A-3 888 362**
**US-A-4 146 924**
**US-A-4 356 554**

**ROBOTICS TODAY, Winter 1979-80, Society of
Manufacturing Engineers, pages 20-22;
G.J.VANDERBRUG et al.: "A vision system for
real-time robot control"**

(73) Proprietor: **DIFFRACTO LTD.**
**2775 Kew Drive**
**Windsor Ontario N8T 3B7 (CA)**

(72) Inventor: **Pryor, Timothy R.**
**105 Centennial Drive**
**Tecumseh Ontario N8N 2N7 (CA)**

(74) Representative: **Jennings, Guy Kenneth et al**
**GILL JENNINGS & EVERY 53-64 Chancery Lane**
**London WC2A 1HN (GB)**

Courier Press, Leamington Spa, England.

## Description

This invention relates to robotics, and in particular it relates to a method and apparatus for calibrating a robot.

The very essence of a robotic apparatus is that its movements are accurately predetermined so as to accurately carry out an intended operation such as handling or working on an object, the latter including, for example, welding or inspecting an object. Systems for guiding the robots through the course of their intended movements, to further enhance the accuracy of such movements have therefore been proposed.

However, no matter how perfect the original predetermined movements or no matter how accurate the guidance systems for enhancing the robot's movements, the nature of the environment in which the robots are utilised, including environmental conditions exterior to the robot make it virtually impossible to assure perfect positional accuracy at all times.

For example, many robots, particularly multi-joint articulated robots, are generally not capable of maintaining their positional actions over a long period of time. Furthermore, when approaching a given desired position from different paths, they often provide different results, even when functioning as a result of the same computer input commands. This can be extremely difficult in a fully flexible automatic factory situation where different path commands may have to be generated by the computer and the robot is expected to follow them under all conditions. Apparatus quite suitable for the purpose of enhancing the accuracy of the predetermined robot movements, is shown in U.S. patent no. 4,219,847.

EP—A—42,960 proposes a method for at least partially meeting these difficulties by generating a series of correction signals which are intended to compensate for any inaccuracies. Each signal is generated as a result of comparison between a nominal position (i.e. the theoretical position intended by the computerized program) and the actual position taken up by the robot arm as a result of the computer control. These two positions are compared and a correction signal is generated which is subsequently used to modify the respective guidance signal. Comparisons are made between a set of nominal positions and a corresponding set of associated actual positions, most conveniently by the use of an accurate calibration mask and the resultant signals are stored until needed. In other words, when the robot arm is subsequently to be moved to a desired position, the stored correction signal is recalled and the guidance signal from the computer is modified accordingly. However, this still leaves errors of the kind actually discussed in the specification of EP—A—42,960, and which will clearly vary over a period of time e.g. errors in connecting linkages or due to the specific locations or directions of movement of the robot arm and will also depend on the direction from which the robot arm approaches any desired position.

Hence, notwithstanding the improved means discussed above and known heretofore for enhancing guiding of the robot arm, there still exists a need to correct inaccuracies in the robot's position which cannot be corrected using known predetermined and improved guidance means and the primary object of the invention is to satisfy this need.

In principle this is achieved in accordance with the present invention by sensing the position of the arm and operative end, independently of the guidance means, as they approach the work station, to generate a calibration signal which is compared with a predetermined reference signal to establish the correction signal, and the guidance computer is re-set in response to this correction signal in other words, instead of generating a correction signal in advance and storing it until it is required, during which time additional errors may creep in as just mentioned, the correction signal is not generated until the robot arm and its operative end are actually approaching the work station and then, this signal is used directly to re-set the guidance computer. Not only does this avoid any possibility of error being introduced between the generation of the correction signal and the modification of the guidance signal, but the correction signal actually takes into account the path of approach of the robot arm.

As a result, as the robot's operative end approaches the work station, any errors in its basic computerized program are corrected so that the robot's arm with its operating end are essentially given a fresh start from the location at which the calibration occurred, which will be in close proximity to the object, thereby in effect cancelling out any errors which preceded the point of calibration.

Apparatus in accordance with the invention and having an arm with an operative end for automatically handling or working on an object at a work station and a computerized guidance means for controlling movements of the arm and operative end for carrying out an intended handling or working on the object, and a correction means for checking and if necessary re-setting the guidance means, is characterised in that the correction means comprises calibration means for sensing the position of the arm and operative end independently of the guidance means, as the arm and operative end approach the work station and for generating a calibration signal, and means for comparing the calibration signal against a reference signal, noting any deviation therebetween constituting a correction signal and for re-setting the computerized guidance means in response to the correction signal.

In a preferred arrangement the calibration means comprises at least one target mounted on the arm and operative end, and including at least one camera mounted at a location independent of the arm and operative end appropriate for viewing the target as the arm and operative end approach the work station. In one arrangement, one or more cameras are located on the robot's arm while the target or targets are located at fixed locations in the vicinity of the work station such as on the floor, or on a pillar, on the fixed part of a conveyor, or the like. In lieu of being mounted on the robot's arm, the cameras can be mounted at a remote location and in communication with sensing points on the robot's arm through fiber optics.

In another arrangement, the targets can be mounted on the robot's arm and the cameras located at fixed positions on the floor, pillars, or the like in the vicinity of the work station.

Examples in accordance with the present invention will now be described in more detail, with reference to the accompanying drawings, in which:—

Figure 1 is a perspective, schematic view of a robot and its work station, utilizing the features of the present invention;

Figure 2 is a schematic, perspective view similar to Figure 1 but showing a modification thereof; and

Figures 3A and 3B are diagrammatic views of the target, illustrating the operation of the invention.

There follows a detailed description of the preferred embodiments of the invention, to be read together with the accompanying drawings, wherein like elements are represented by like numerals throughout the several views.

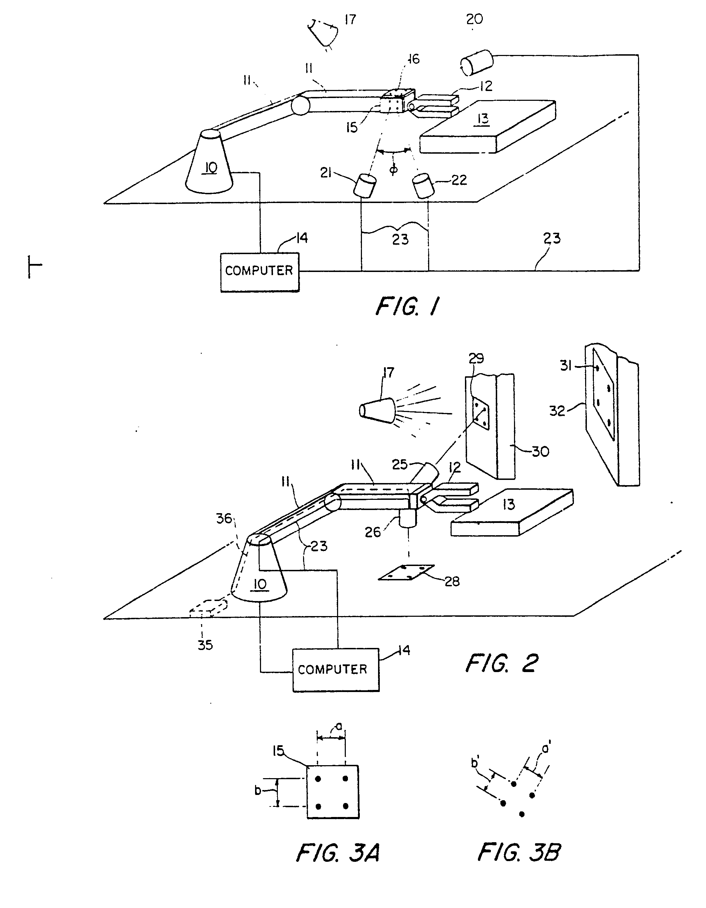

Figure 1 illustrates a first preferred embodiment of the invention wherein a robotic apparatus 10 fixed to the floor includes an arm 11, in this case a multi-joint arm having an operative end 12. While this operative end can take any form for the purpose of handling or working on an object, including a camera which inspects an object, in the illustrated example there is shown an end effector 12. The work station 13, shown schematically in Figure 1, represents the area at which the operative end 12 would perform its function on the object.

In a known manner, the movements of the apparatus for purposes of carrying out the intended operation are controlled by computer 14. However, since it is impossible to guarantee positional accuracy of the operative end 12 under all conditions, there is provided in accordance with the present invention a system for checking and calibrating the position of the robot as it approaches the work station 13. In this embodiment this system includes one or more targets mounted on the robot arm 11, as illustrated at 15 and 16, and one or more cameras, as illustrated at 20, 21 and 22, each of which cameras are fixed relative to the surrounding environment, as illustrated by the floor level, independently of the robot arm 11. The cameras communicate through lines 23 with the computer 14.

In the embodiment of Figure 1, as the robot's operative end 12 approaches the work station 13, it passes its target 15 over a camera unit, for example, camera 21 which may be fixed with respect to the floor and in fact buried in the floor of the plant at a location which is presighted with respect to the robot's own coordinate axis. Alternatively, if repeatability is the only factor in question, camera 21 does not have to be presighted but it can be assured that the camera is returned to a certain initial condition point or in any event, its position relative to the robot can be determined.

As illustrated, the target 15 has four dots. Three dots are the minimum for checking the position of the robot arm 11 up to six axes of coordinate data including X, Y, Z, roll, pitch and yaw. The fourth dot in the pattern provides a check and hence a more accurate calibration. Hence, as the target 15 approached the view of camera 21 the computer 14 dictated that the arm 11 should be in a certain predetermined position. Camera 21 will either confirm this position or note a deviation therein. If a deviation is noted, camera 21 will convey this information back to the computer 14 through lines 23, whereupon the computer 14 will make the corrections in the robot's memory for that position. Since the calibrating system is performing its function in a very limited area, i.e. only in the area close to the work station as the operative end 12 approaches same, it is only correcting the robot position over a very small range. This enables the system to have a high resolution, typically 0.02 mm.

For further resolution, especially in other axes, a two camera solution may be desirable. In this case, a second camera 22 would be provided, which camera also views the target 15, this camera being spaced from the target 15 by an acute included angle $\phi$. In the alternative, the second camera can be located at position 20 which is 90° and in this case the camera would view a duplicate target 16. There may be provided a cube at the end of the robot arm having a plurality of these targets fixed thereon and of course geometrically fixed in reference with respect to each other. The targets may take many different forms such as white dots on a black background, illuminated points of diode lasers or light emitting diodes, fiber ends illuminated from a remote light source, etc. The camera units are typically solid state photo detector arrays of the type having a large number of separate photo detectors, and having an intrinsic digital measuring capability. Such units may have at least ten but preferably over a hundred separate photo detectors.

A flashed (strobe) target illumination light 17 or flashed target points (diode lasers or light emitting diodes) may be used. This provides the advantage of reading the dots and making the correction while the robot is in motion, i.e. "on-the-fly". If such a flashed light source is utilized, then a position sensing analogue photo detector such as a UDT SC-10 can be used. However, this is drift prone and therefore not necessarily suited to the most accurate mensuration. For calibration over larger zones of the work area, it may be necessary to mechanically sweep the field of view.

Figure 2 illustrates a calibration system according to the present invention in which the basic features thereof have been reversed, i.e. in this case, the robot arm carries the cameras while the dotted targets are fixed with respect to the work station, i.e. on the floor, on pillars or the like, independently of the robot arm 11. Figure 2 illustrates a pair of cameras 25 and 26 mounted on the robot arm 11 and targets 28 and 29 fixed to the floor and to a pillar 30, respectively. A larger target 31 is mounted on a more distant pillar 32.

Adding the cameras to the robot arm has the disadvantage of adding additional weight thereto. However, these cameras are relatively light. Moreover, as an improvement thereof, the camera can be located at a remote position, as illustrated diagrammatically at 35, and connected to viewing points at the end of the robot arm 11 through fiber optics 36.

As illustrated in Figure 2, the robot arm 11 with the cameras thereon moves toward the work station 13 and as it approaches the work station the targets 28 or 29 come within view of the cameras 26 and 25, respectively. As in Figure 1, four dot matrix targets are desirable, although the system is operable for correcting in all six directions utilizing a minimum of three dots. In the embodiment of Figure 2, since the targets are not carried by the robot arm, the targets may be larger. Consequently, the accuracy of the solution may be considerably higher than in the case of a single closely spaced target. This is particularly true in range and angle dimensions.

In this embodiment with the targets fixed at selected locations in the vicinity of the work station, additional targets may be provided at especially advantageous points. For example, a target may be located directly behind a work object being conveyed such that when the work is transferred out, the target remains and is viewed by a camera, thus indicating removal of the object. Also, in the embodiment of Figure 2, many more target views can easily be utilized. Hence, the robot can be calibrated and hence corrected from a variety of angles by simply looking at the same target plate with different cameras or different points in time. This can give improved resolution as encoder errors are statistically averaged and the average of multiple transform equations are used. Since targets are cheap, one or more target plates can be used very easily. In addition, more than one camera can be used on the robot. Two are illustrated in this embodiment. Given the fiber optic system for remotely locating the camera, each camera can view different directions simultaneously.

Also, in Figure 2, a strobe target illumination light 17 may be used for making readings on-the-fly. This can be important for maximum cycle rate since the robot need not stop. The flash source "freezes" the target image on the photodetector (for example, the matrix array) which then is read out subsequently. To accomplish this on the present matrix arrays, it may be necessary to provide a dump pulse to clear the array moments before the flash.

In this case the trigger to flash generally would come from the robot axis controller which would convey a signal indicating that the robot is at the calibration position. Use of flash sources also provides good background light level discrimination. Where laser or light emitting diode sources are used, further discrimination results by using wave length band pass filters in front of the detector.

It will be noted that the targets may also be located on pallets, on automation equipment or on the objects themselves to provide a very local calibration to the robot axes.

Figure 3 illustrates a practical example of the present invention using a typical four dot matrix target to correct in all six directions, X, Y, Z, $\theta$, $\phi$, $\gamma$. Figure 3A illustrates the correct reference position of the matrix, i.e. the view of the matrix if the robot arm 11 were perfectly positioned as the target came into the view of the camera. However, Figure 3B illustrates the matrix as actually viewed by the camera. The target image, as viewed on the computer screen is off center and tilted such that the distances a' and b' are less than the reference distances a and b. This indicates a tilt and also a Z axis range lengthening. These variables can be solved independently given equations such as are known in the photogrammetric art and referred to in the above noted Pinkney et al U.S. patent no. 4,219,847.

In addition, the dots in Figure 3B illustrate that the target is off center in both axes. All of the correction data is then fed into the computer 14 to reset the memory which controls the computers movements, whereupon the servos operating the robot arm 11 are actually moved to reposition the robot so that its target appears as in Figure 3A. This new position of the correct reading is then locked into the memory and becomes a new reference point from which the robot goes forward.

It is noted that the calibration system does not have to be permanently attached to the robot but can be brought up to it at any time, assuming that some reliable procedure exists for accurately positioning the calibration system for each subsequent application. Thus, once the system has been operated, periodic calibration of many robots in a plant can be done with a single calibration system.

**Claims**

1. A method for calibrating a robotic apparatus of the type having an arm (11) and operative end (12) for automatically handling or working on an object at a work station (13), by guiding movements of the arm and operative end by means of a programmed guidance computer (14) to carry out an intended handling or working on the object, and calibrating movements of the computerized arm (11) and operative end (12) by generating a correction as a result of comparison between a nominal position and an actual position of the arm and using the correction signal to modify the respective guidance signal, characterised in that the position of the arm and operative end, as they approach the work station, is sensed independently of the guidance means, to generate a calibration signal, the calibration signal is compared with a predetermined reference signal to establish the correction signal and the guidance computer is re-set in response to the correction signal.

2. A method according to claim 1 characterised in that the sensing of the portion of the arm (11) and operative end (12) as they approach the work station (13) comprises viewing a target (15, 16, 28, 29) with a camera (20, 21, 22, 25, 26), either the camera or the target being located on the arm and operative end and the other being located in the vicinity of the work station (13) and fixed independently of the arm and operative end.

3. A method according to claim 2 characterised in that at least one camera means (25, 26) is located on the arm (11) and operative end (12) and views at least one target (28, 29) located at the work station.

4. A method according to claim 2, wherein at least one camera (20, 21, 22) is located at the work station (13), independently of the arm (11) and operative end (12) and at least one target (15, 16) is mounted on the arm (11) and operative end (12).

5. A method according to claim 3 or claim 4 wherein the target comprises a pattern of at least three dots, and the deviation signal represents a distortion of this pattern of dots.

6. A method according to any one of claims 2 to 5 wherein the step of viewing the target with the camera is carried out under flashed light (17) (strobe) illumination.

7. Robotic apparatus having an arm (11) with an operative end (12 for automatically handling or working on an object at a work station (13), a computerized guidance means (14) for controlling movements of the arm (11) and operative end (12) for carrying out an intended handling or working on the object and correction means for checking and of necessary re-setting the guidance means, characterised in that the correction means comprises calibrating means for sensing the position of the arm and operative end independently of the guidance means, as the arm and operative end approach the work station, for generating a calibration signal, and means for comprising the calibration signal against a reference signal, noting any deviation therebetween constituting a correction signal and for re-setting the computerized guidance means in response to the correction signal.

8. Apparatus according to claim 7, characterised in that the calibration means comprises at least one target (15, 16) mounted on the arm (11) and operative end (12), and at least one camera (20, 21, 22) mounted at a location independent of the arm and operative end and appropriate for viewing the target as the arm (11) and operative end (12) approach the work station (13).

9. Apparatus according to claim 8 characterised by a plurality of cameras positioned to view a single target.

10. Apparatus according to claim 7 characterised in that the calibration means comprises at least one camera means (25, 26) on the arm (11) and operative end (12), and at least one target (28, 29) mounted in the vicinity of the work station (13), independently of the arm (11) and operative end (12).

11. Apparatus according to claim 10 characterised in that the camera means comprises a camera device (35) located remote from the arm (11) and operative end (12), and fiber optics (36) located on the arm and operative end and communicating with the camera display.

12. Apparatus according to any one of claims 8 to 11 characterised in that the target comprises a pattern of at least three dots positioned to be viewed by the camera to ascertain the position of the arm and operative end in the X, Y, Z pitch, roll and yaw directions.

13. Apparatus according to claim 12 characterised in that the target includes four dots arranged in a rectangular pattern.

**Patentansprüche**

1. Verfahren zum Kalibrieren eines Roboters, welcher einen Arm (11) und ein Betriebsende (12) zur automatischen Handhabung oder Bearbeitung eines Gegenstandes an einer Arbeitsstation (13) aufweist, indem der Arm und das Betriebsende mittels eines programmierten Führungscomputers (14) führend bewegt werden, um eine beabsichtigte Handhabung oder Bearbeitung eines Gegenstandes auszuführen und kalibrierende Bewegungen des computerisierten Arms (11) und des Betriebsendes (12) durch Erzeugen einer Korrektur als Ergebnis eines Vergleichs zwischen einer Nominalstellung und einer tatsächlichen Stellung des Armes, sowie Verwendung des Korrektursignals zur Modifizierung des entsprechenden Führungssignals, dadurch gekennzeichnet, daß die Stellung des Armes und des Betriebsendes, während sie sich der Arbeitsstation nähern, unabhängig vom Führungsmittel ermittelt wird, um ein Kalibrierungssignal zu erzeugen und daß das Kalibrierungssignal mit einem vorbestimmten Referenzsignal verglichen wird, um das Korrektursignal zu erstellen und daß der Führungscomputer ansprechend auf das Korrektursignal zurückgestellt bzw. abgeglichen wird.

2. Verfahren nach Anspruch 1, dadurch gekennzeichnet, daß die Ermittlung der Stellung des Arms (11) und des Betriebs-bzw. Betätigungsendes (12) während sie sich der Arbeitsstation (13) nähern, die Beobachtung eines Zieles (15, 16, 28, 29) mit einer Kamera (20, 21, 22, 25, 26) umfaßt, wobei entweder die Kamera oder das Ziel auf dem Arm und dem Betriebsende und das andere in der Nähe der Arbeitsstation (13) angeordnet und unabhängig vom Arm und Betriebsende festgelegt bzw. befestigt sind.

3. Verfahren nach Anspruch 2, dadurch gekennzeichnet, daß mindestens ein Kameramittel (25, 26) auf dem Arm (11) und dem Betriebsende (12) angeordnet ist und mindestens ein Ziel (28, 29) beobachtet, daß an der Arbeitsstation angeordnet ist.

4. Verfahren nach Anspruch 2, bei dem mindestens eine Kamera (20, 21, 22) an der Arbeitsstation (13) angeordnet ist, unabhängig vom Arm (11) und dem Betriebsende (12) und mindestens ein Ziel (15, 16) auf dem Arm (11) und dem Betriebsende (12) befestigt ist.

5. Verfahren nach Anspruch 3 oder 4, bei dem das Ziel ein Muster von mindestens drei Punkten umfaßt, und das Abweichungssignal eine Verzerrung dieses Punktemusters darstellt.

6. Verfahren nach irgendeinem der Ansprüche 2 bis 5, bei dem die Stufe der Beobachtung des Zieles mit der Kamera unter Blitzlichtbeleuchtung (17) (Strobe) durchgeführt wird.

7. Robotervorrichtung, die einen Arm (11) mit einem Betriebsende (12) zur automatischen Handhabung oder Bearbeitung eines Gegenstandes an einer Arbeitsstation (13) umfaßt, sowie ein computerisiertes Führungsmittel (14) zur Steuerung der Bewegungen des Armes (11) und des Betriebsendes (12) um eine beabsichtigte Handhabung oder Bearbeitung des Gegenstandes durchzuführen, und ein Korrekturmittel zum Überprüfen und, falls erforderlich, Rückstellung bzw. Abgleich des Führungsmittels, dadurch gekennzeichnet, daß das Korrekturmittel ein Kalibrierungsmittel zur Ermittlung der Stellung des Armes und des Betriebsendes unabhängig vom Führungsmittel umfaßt, während der Arm und das Betriebsende sich der Arbeitsstation nähern, um ein Kalibrierungssignal zu erzeugen, sowie Mittel zum Vergleich des Kalibrierungssignals gegenüber eines Referenzsignals, wobei jegliche Abweichung dazwischen festgestellt wird, die ein Korrektursignal hervorruft und zur Rückstellung des computerisierten Führungsmittels ansprechend auf das Korrektursignal.

8. Vorrichtung nach Anspruch 7, dadurch gekennzeichnet, daß das Kalibrierungsmittel mindestens ein Ziel (15, 16) umfaßt, daß auf dem Arm (11) und dem Betriebsende (12) befestigt ist sowie mindestens eine Kamera (20, 21, 22), die an einer Stellung unabhängig vom Arm und dem Betriebsende befestigt und zur Beobachtung des Ziels geeignet ist, während der Arm (11) und das Betriebsende (12) sich der Arbeitsstation (13) nähern.

9. Vorrichtung nach Anspruch 8, gekennzeichnet durch eine Vielzahl von Kameras, die derart angeordnet sind, daß sie ein einzelnes Ziel beobachten.

10. Vorrichtung nach Anspruch 7, dadurch gekennzeichnet, daß das Kalibrierungsmittel mindestens ein Kameramittel (25, 26) auf dem Arm (11) und dem Betriebsende (12) umfaßt, und daß mindestens ein Ziel (28, 29) in der Nähe der Arbeitsstation (13) unabhängig vom Arm (11) und dem Betriebsende (12) befestigt ist.

11. Vorrichtung nach Anspruch 10, dadurch gekennzeichnet, daß das Kameramittel mindestens eine Kameraeinrichtung (35) umfaßt, die entfernt vom Arm (11) und dem Betriebsende (12) angeordnet sind, und wobei eine Faseroptik (36) auf dem Arm und dem Betätigungsende angeordnet ist und mit dem Kameradisplay kommuniziert.

12. Vorrichtung nach irgendeinem der Ansprüche 8 bis 11, dadurch gekennzeichnet, daß das Ziel ein Muster von mindestens drei Punkten umfaßt, die zur Beobachtung durch die Kamera angeordnet sind, um die Stellung des Arms und des Betriebsendes in den X, Y Z-Steigungs-Rollund Scherrichtungen festzustellen.

13. Vorrichtung nach Anspruch 12, dadurch gekennzeichnet, daß das Ziel vier Punkte umfaßt, die in einem Rechteckmuster angeordnet sind.

**Revendications**

1. Procédé pour étalonner un appareil robotique du type comportant un bras (11) et une extrémité active (12) pour manipuler ou travailler automatiquement sur un objet dans un poste (13) de travail, par guidage des mouvements du bras et de l'extrémité active au moyen d'un calculateur de guidage programmé (14) afin d'effectuer une manipulation ou un travail prévu sur l'objet, et étalonnage de mouvements du bras (11) et de l'extrémité active (12), commandé par ordinateur, par génération d'une correction à la suite d'une comparison entre une position nominale et une position réelle du bras et utilisation du signal de correction pour modifier le signal de guidage respectif, caractérisé en ce que la position du bras et de l'extrémité active, lorsqu'ils approchent du poste de travail, est détectée indépendamment des moyens de guidage, afin qu'un signal d'étalonnage soit généré, le signal d'étalonnage est comparé à un signal prédéterminé de référence pour établir le signal de correction et l'ordinateur de guidage est réinitialisé en réponse au signal de correction.

2. Procédé selon la revendication 1, caractérisé en ce que la détection de la position du bras (11) et de l'extrémité active (12), lorsqu'ils approchent du poste (13) de travail, consiste à viser une cible (15, 16, 28, 29) à l'aide d'un appareil de prise de vues (20, 21, 22, 25, 26), l'un de l'appareil de prise de vues et de la cible étant situé sur le bras et l'extrémité active et l'autre étant situé à proximité du poste (13) de travail et fixe indépendamment du bras et de l'extrémité active.

3. Procédé selon la revendication 2, caractérisé en ce qu'au moins un moyen à appareil de prise de vues (25, 26) est situé sur le bras (11) et sur l'extrémité active (12) et vise au moins une cible (28, 29) située dans le poste de travail.

4. Procédé selon la revendication 2, dans lequel au moins un appareil de prise de vues (20, 21, 22) est situé dans le poste de travail (13), indépendamment du bras (11) et de l'extrémité (12), et au moins une cible (15, 16) est montée sur le bras (11) et l'extrémité active (12).

5. Procédé selon la revendication 3 ou la revendication 4, dans lequel la cible comprend une mire d'au moins trois points, et le signal de déviation représente une distorsion de cette mire de points.

6. Procédé selon l'une quelconque des revendications 2 à 5, dans lequel l'étape consistant à viser la cible avec l'appareil de prise de vue est effectuée sous éclairage par lumière à éclats (17) (stroboscopique).

7. Appareil robotique comportant un bras (11) muni d'une extrémité active (12) pour manipuler ou travailler automatiquement sur un objet dans un poste (13) de travail, des moyens de guidage (14) commandés par ordinateur destinés à commander les mouvements du bras (11) et de l'extrémité active (12) pour effectuer une manipulation ou un travail prévu sur l'objet et des moyens de correction destinés à contrôler et, si cela est nécessaire, à réinitialiser les moyens de guidage, caractérisé en ce que les moyens de correction comprennent des moyens d'étalonnage destinés à détecter la position du bras et de l'extrémité active indépendam ment des moyens de guidage, lorsque le bras et l'extrémité active approchent du poste de travail, pour générer un signal d'étalonnage, et des moyens destinés à comparer le signal d'étalonnage à une signal de référence, à noter tout écart entre eux, constituant un signal de correction, et à réinitialiser les moyens de guidage commandés par ordinateur en réponse au signal de correction.

8. Appareil selon la revendication 7, caractérisé en ce que les moyens d'étalonnage comprennent au moins une cible (15, 16) montée sur le bras (11) et l'extrémité active (12), et au moins un appareil de prise de vues (20, 21, 22) monté dans une position indépendante du bras et de l'extrémité active et appropriée pour viser la cible lorsque le bras (11) et l'extrémité active (12) approchent du poste de travail (13).

9. Appareil selon la revendication 8, caractérisé par plusieurs appareils de prise de vues disposés de façon à viser une cible unique.

10. Appareil selon la revendication 7, caractérisé en ce que les moyens d'étalonnage comprennent au moins un moyen à appareil de prise de vues (25, 26) situé sur le bras (11) et l'extrémité active (12), et au moins une cible (28, 29) montée à proximité du poste de travail (13), indépendamment du bras (11) et de l'extrémité active (12).

11. Appareil selon la revendication 10, caractérisé en ce que le moyen à appareil de prise de vues comprend un dispositif (35) de prise de vues placé à distance du bras (11) et de l'extrémité active (12), et des fibres optiques (36) situées sur le bras et l'extrémité active et communiquant avec l'image de l'appareil de prise de vues.

12. Appareil selon l'une quelconque des revendications 8 à 11, caractérisé en ce que la cible comprend une mire d'au moins trois points placée de façon à être visée par l'appareil de prise de vues pour s'assurer de la position du bras et de l'extrémité active dans les directions X, Y, Z, de tangage, de roulis et de lacet.

13. Appareil selon la revendication 12, caractérisé en ce que la cible comporte quatre points agencés en une mire rectangulaire.

0 114 505

FIG. 1

FIG. 2

FIG. 3A

FIG. 3B

1